# EUROPEAN PATENT SPECIFICATION

(11) **EP 0 554 964 B1**
(45) Date of publication and mention of the grant of the patent: **23.10.1996**
(21) Application number: 93200308.0
(22) Date of filing: 05.02.1993
(51) Int. Cl.: B29B 17/02, C08J 11/02, B30B 11/24, B30B 11/22

(54) **Degassing of PUR-foam**
Entgasung von Polyurethanschaum
Dégazage de mousse de polyuréthane

(30) Priority: 07.02.1992 NL 9200232
(43) Date of publication of application: 11.08.1993
(73) Proprietor: WEBCON RECYCLING SYSTEMS B.V., NL-7522 NB Enschede (NL)
(72) Inventor: Weber, Johannes, NL-7534 EP Enschede (NL)
(74) Representative: Schumann, Bernard Herman Johan

(56) References cited:
- DE-A- 2 351 328
- DE-A- 3 933 811
- GB-A- 2 124 238
- KUNSTSTOFFE vol. 80, no. 4, April 1990, MUNICH, page 509 K. BAYER , K.FLEISCHER & H.HAGER'FCKW aus PUR-Isolierschaum rückgewinnen'

## Description

The invention relates to a method for degassing solid foamed plastic, in particular polyurethane foam, by grinding and compacting that foam.

Such a method is known from DE-A-3 933 811.

Solid foamed plastic contains gas which is introduced therein during the production of this solid foam, for instance in order to enable use of the foamed plastic as thermally-insulating material.

An example of an foamed plastic for insulation purposes is polyurethane (PUR-foam) which is usually foamed with a chlorofluorocarbon (CFC) gas because this gas contributes considerably towards the insulation value of the foam. PUR-foam is greatly used for instance as thermal insulation material in refrigerators and in walls and floors of buildings. PUR-foam generally contains microscopically small cells in which CFC gas is present. The cells are enclosed by a solid PUR-matrix which likewise contains CFC gas in a quantity determined by a pressure equilibrium with the CFC gas in the cells adjusted by diffusion. The density of PUR-foam applied in refrigerators amounts to about 30-40 kg³. In practice the foam contains between 7 and 14% by weight CFC gas with a chemical composition CCl₃F (R11). Roughly 25% of these CFC gases is present in diffused form in the matrix of the foam material.

It is important, for instance for reasons of environmental protection, to degas in a controlled manner PUR-foam no longer in use, for instance from discarded refrigerators, and to collect the escaping gases prior to the PUR-foam being incinerated, dumped as waste or otherwise further processed.

Degassing of solid foamed plastic is likewise of importance in situations in which it is desired to compact this foam so that it can be dumped or burnt, germ-free, in environmentally safe manner, such as for instance polystyrene used as packing material for fresh fish.

According to the known method for degassing foamed plastic, the foam is ground to a form suitable for further processing while the escaping gases are collected, whereafter it is compacted under very high pressure in a ram press, likewise while the escaping gases are collected.

A serious drawback to the known method is that a substantial part of the gas present in the relevant foamed plastic is not released. When PUR-foam is degassed according to the known method, for instance only about 75% of the CFC gases present therein can be extracted. An additional drawback is that the known method requires the availability of very expensive and large format machines which operate with a sluice mechanism whereby a continuous feed of foam nuggets is not possible.

The object of the invention is to provide a method with which these drawbacks are not associated.

This object is achieved according to the invention with a method according to which grinding and compacting are performed simultaneously.

Increasing the pressure on nuggets of foamed plastic according to the invention during grinding thereof or continuing the grinding process during the compacting achieves that practically all the gas present in the cells or in the matrix of the foamed plastic is expelled therefrom.

It has been found that the speed at which the foam can be degassed according to the invention can be increased still further when the temperature of the foamed plastic is increased during grinding and compacting.

Degassing takes place according to the invention in particularly rapid and relatively inexpensive manner when a screw compactor is employed for the grinding and compacting.

A screw compactor or extruder is comparatively inexpensive to purchase and to use, has a compact structure and comprises relatively few moving parts. A screw compactor is inherently suitable for continuous processing operations, while such a device can be adapted in simple manner to the processing of diverse foamed plastics.

According to the invention combustion-enhancing constituents and/or constituents increasing the mechanical strength of degassed and compacted plastic can advantageously be added to the foamed plastic for degassing.

Addition of combustion-enhancing constituents offers advantages for instance in situations where no re-use options exist for a per se poorly-combustible compacted foam and there are objections to dumping thereof, and it is the wish to proceed with incineration for these or other reasons. The addition of constituents increasing the mechanical strength offer particular advantage in situations where the compacted foamed plastic has little coherence, resulting in crumbling and dust-formation. It has been found that dust-formation is also countered successfully when the finished degassed and compacted foamed plastic is provided with a protective layer, for instance a wax or paraffin layer.

The invention further relates to a device for degassing foamed plastic according to the invented method, which device comprises means for simultaneously grinding and compacting foamed plastic.

An embodiment of a device according to the invention comprises means for increasing the temperature of the foamed plastic during the grinding and compacting.

In preference a device for degassing foamed plastic according to the invention is characterized by a screw compactor.

An embodiment of such a device with a screw compactor comprises a feed device for the screw compactor in addition to gas blocking means for a gas escaping via this feed device out of the device.

In this latter embodiment different per se known systems can be used as gas blocking means, such as for instance an air-lock in the feed device, optionally in combination with a piston mechanism disposed parallel thereto with which the foam is pressed into the screw compactor. Also provided as gas blocking means is a rotating cylinder comprising a number of smaller cylinders extending over the whole length thereof, whereof one at a time is filled with foam from a supply silo and is placed by a rotation in line with the hopper of the extruder, whereafter a piston presses the foam into the hopper and the extruder. Gases escaping from the extruder are likewise blocked in a feed device in which the foam for degassing is driven from the extruder by a powerful gas flow device. The build-up of overpressure around the extruder-inlet is then prevented using gas discharge channels in the feed device at that location. Escape of gas from the device is prevented in yet another manner using suction lines which debouch in the feed device above the extruder inlet.

In yet another embodiment of a device with screw compactor according to the invention the screw compactor debouches into a chamber closable for gases.

Such a gas-closable chamber offers the advantage that any fumes from nuggets of hot, compacted degassed plastic can be drawn off or that dust can be captured in those cases in which the degassed plastic material is produced in powder form.

Such a gas-closable chamber is therefore preferably characterized by pressure control means for regulating the pressure, in particular for regulating an underpressure in this chamber.

In an embodiment wherein the degassed plastic material is produced in powder form, the screw compactor debouches above at least one vibrating plate accommodated in the closable chamber and reciprocally movable in a practically horizontal plane. Due to the movement of this vibrating plate any still remaining gases will be easily released, whereafter they can be discharged.

In a following embodiment the screw compactor debouches above at least two vibrating plates reciprocally movable in a practically horizontal plane and arranged in a cascade at least partially one above the other.

A screw compactor for a device according to the invention comprising a substantially rotation-symmetrical jacket with a lateral inlet and an outlet, a conveyor screw with screw blade received rotatably in this jacket and a drive is characterized by a cutting edge on at least a part of the screw blade co-acting with the wall of the jacket in the region of the inlet.

The cutting edge comprises for instance a sharp edge obtained by grinding at least a portion of the screw blade. In a screw compactor having a screw blade thus provided with a cutting edge the cutting power is markedly increased while retaining the capacity to build up very high pressures in a supplied material in the end of the screw compactor.

In preference the cutting edge comprises cutting teeth.

Such cutting teeth, which can be formed by a saw-toothing of at least a portion of a screw blade or by knives welded or otherwise arranged on the screw blade, further increase the cutting power.

In yet another embodiment of a screw compactor with a screw provided with cutting teeth, this screw compactor comprises peripheral grooves in the jacket which co-act with the cutting teeth.

Still another embodiment of a screw compactor for a device according to the invention comprises at least one channel through the wall of the jacket.

The presence of a channel through the wall of the jacket is important in situations where the foam plastic for degassing contains a relatively large amount of moisture which, at the high temperatures occurring in the compactor, can change to vapour form, which results in sharp pressure increase in the end portion of the compactor, as a consequence of which nuggets of compressed plastic material can be thrust out of the compactor with explosive violence. Such an effect can likewise occur when the pressure in the compactor rises too high as a result of too strong a heating of the gas released from the plastic.

The form of a channel through the wall of the jacket is determined among other things by the foam plastic for degassing, the dimensions of the compactor and the process parameters according to which the device is used. A channel which can be arranged in simple manner comprises for example a gap in peripheral direction in the wall of the jacket of the compactor.

A channel is preferably oriented in the screw compactor inclining rearward to the outside relative to the transporting direction.

The rearward inclining position of a channel offers the advantage that such a channel does not become quickly blocked with compressed plastic material but remains open for the discharge of gas and moisture, also and particularly in situations where the pressure in the compactor is in danger of becoming too high.

Penetration of compacted plastic material into the channel in a jacket wall of a screw compactor is likewise prevented in a channel whereof the debouchment in the space enclosed by the jacket is filled with gas-permeable material.

In preference a screw compactor for a device according to the invention is characterized by a conveyor screw which comprises an axial channel debouching in the rear part thereof and at least one radial bore debouching in that channel.

In a screw compactor according to this latter embodiment it is possible with a suitable choice of the location and dimensions of the radial bore to discharge gases via the interior of the conveyor screw from any desired position in lengthwise direction in the screw compactor.

In order to discharge gases and possible liquids from the plastic for compacting in a screw compactor, a channel in such a screw compactor is connected via a line to a discharge system.

The invention will be further elucidated in the following on the basis of an embodiment and with reference to the drawing.

In the drawing:
figure 1 shows a schematic side view of a device for degassing foamed plastic;
figure 2 shows a cut away perspective of a part of an extruder for a device according to the invention;
figure 3 shows a cut away perspective of a detail of an extruder for a device according to the invention.

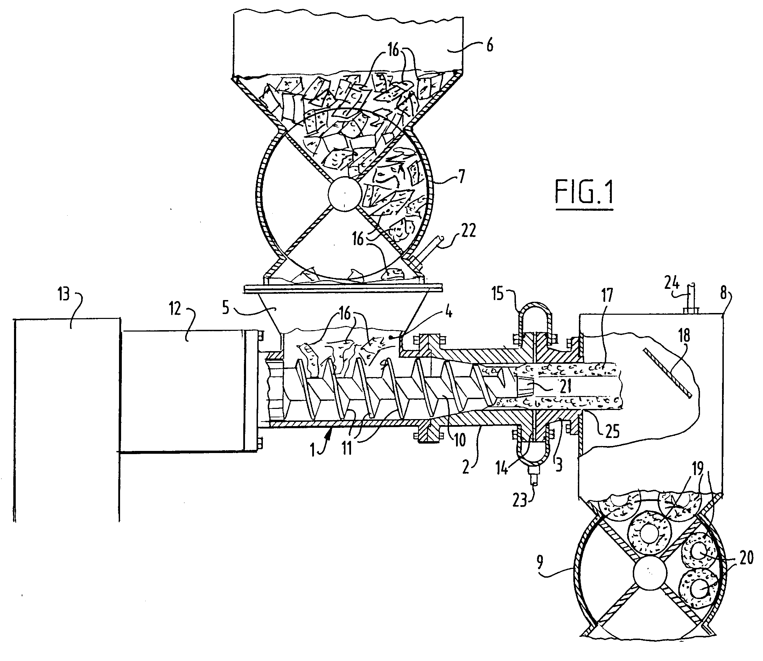

Figure 1 shows a device for degassing foamed plastic, with an extruder having a first jacket part 1, a second jacket part 2, a third jacket part 3 and a lateral inlet 4 above which are placed an inlet funnel 5 and a hopper 6 connected thereto via a first air-lock 7. The axial outlet 25 of the extruder debouches into a gas-tight chamber 8 which is closed off from the outside via a second air-lock 9. The screw shaft 10 with spiral-shaped screw blade 11 is driven by drive means (not shown) in casing 12 and column 13. The operation of the device is as follows. Nuggets of foam plastic 16 are supplied by hopper 6 via air-lock 7 and funnel 5 via lateral inlet 4 into the passage formed by screw blade 11. The foam nuggets 16 are further ground in the first jacket part 1 and compacted during the transport in the direction of outlet 25, wherein, particularly in the tapering second jacket part 2, the pressure on the plastic material increases considerably. In the cylinder-shaped third jacket part 3, past screw tip 21, the compacted plastic 17 acquires the form of a hollow or solid cylinder, depending on the process conditions, which is pushed up into the gas-tight chamber 8 until it strikes against breaking plate 18 and breaks off. Gases and moisture from the extruder are discharged via a gap 14 between the second 2 and third 3 jacket part, which are held together with bolts (not shown) and are connected by a cover 15 in peripheral direction. Via conduits 22, 23 and 24, which debouch respectively in advance of the first air-lock 7, in the cover 15 and in the gas-tight chamber 8, gases, and as the case arises also moisture via suction line 23, are discharged to a collecting device (not shown) comprising for instance a condenser and/or an active carbon filter.

The pieces of compacted plastic broken off on breaking plate 18 become available via the second air-lock 9 as briquettes 19 having an axial cavity 20 in the example drawn.

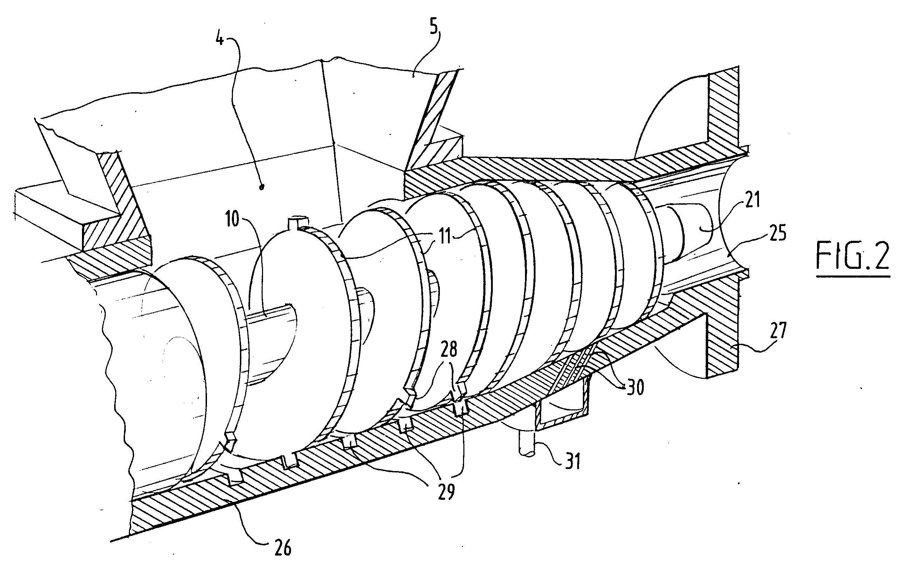

Figure 2 shows a part of an extruder with a jacket part 26, a flange 27 round the axial outlet 25, a screw with screw shaft 10, screw tip 21, spiral-shaped screw blade 11, lateral inlet 4 and funnel 5. Arranged on screw blade 11 in the region of the lateral inlet 4 are cutting teeth 28 to increase the cutting power of the screw extruder. The cutting teeth 28 co-act with peripheral grooves 29 in jacket part 26. The figure further shows channels 30 in the tapering portion of jacket part 26 which are oriented inclining rearward to the outside relative to the transporting direction (from left to right in the figure) and which are in communication with a suction line 31.

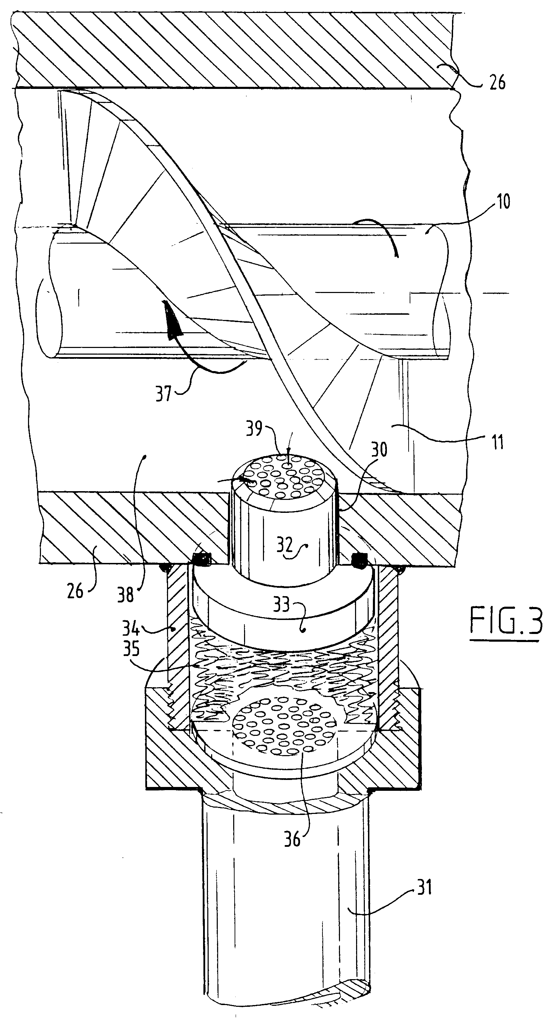

Figure 3 shows a detail of a part of an extruder with jacket part 26, screw shaft 10 and screw blade 11 co-acting with the wall 26. The space 38 enclosed by jacket part 26 is in communication with a suction line 31 via a channel 30 closed off by a perforated cap 32 (for instance of copper). The cap 32 is formed integrally with a perforated piston 33 which is movable in a sleeve 34 and is held under bias by a resilient porous material 35 (for example steel-wool). Sleeve 34 in turn communicates via a perforated bottom 36 with suction line 31.

At each revolution of screw shaft 10 the screw blade 11 presses the perforated cap 32 downward and herein scrapes it clean so that no plastic material disappears into the perforations 39 in cap 32 and the perforations 39 remain available for discharge of gas and liquid from the interior 38 of the extruder. Arrow 37 indicates the rotational direction of the screw corresponding with a transporting direction from left to right in the figure.

## Claims

1. Method for degassing solid foamed plastic, in particular polyurethane foam, by grinding and compacting that foam,
**characterized in that**
grinding and compacting are performed simultaneously.

2. Method as claimed in claim 1, **characterized in that** the temperature of the foamed plastic is increased during grinding and compacting.

3. Method as claimed in claim 1 or 2, **characterized in that** a screw compactor is employed for the grinding and compacting.

4. Method as claimed in any of the claims 1-3, **characterized in that** combustion-enhancing constituents are added to the foamed plastic for degassing.

5. Method as claimed in any of the claims 1-4, **characterized in that** constituents increasing the mechanical strength of degassed and compacted plastic are added to the foamed plastic for degassing.

6. Device for degassing foamed plastic according to a method as claimed in claim 1, **characterized by** means for simultaneously grinding and compacting foamed plastic.

7. Device as claimed in claim 6 for degassing foamed plastic according to a method as claimed in claim 2, **characterized by** means for increasing the temperature of the foamed plastic during the grinding and compacting.

8. Device as claimed in claim 6 or 7 for degassing foamed plastic according to a method as claimed in claim 3, **characterized by** a screw compactor.

9. Device as claimed in claim 8, **characterized in that** this comprises a feed device (5, 6) for the screw compactor in addition to gas blocking means (7) for a gas escaping via this feed device out of the device.

10. Device as claimed in claim 8, **characterized in that** the screw compactor debouches into a chamber (8) closable for gases.

11. Device as claimed in claim 10, **characterized by** pressure control means for regulating the pressure, in particular for regulating an underpressure, in the closable chamber (8).

12. Device as claimed in claim 10, **characterized in that** the screw compactor debouches above at least one vibrating plate reciprocally movable in a practically horizontal plane.

13. Device as claimed in claim 12, **characterized in that** the screw compactor debouches above at least two vibrating plates reciprocally movable in a practically horizontal plane and arranged in a cascade at least partially one above the other.

14. Screw compactor for a device as claimed in claim 8, comprising a substantially rotation-symmetrical jacket (1-3) with a lateral inlet (4) and an outlet (25), a conveyor screw with screw blade (11) accommodated rotatably in this jacket and a drive, **characterized by** a cutting edge on at least a part of the screw blade (11) co-acting with the wall (26) of the jacket in the region of the inlet.

15. Screw compactor as claimed in claim 14, **characterized in that** the cutting edge comprises cutting teeth (28).

16. Screw compactor as claimed in claim 15, **characterized in that** this comprises peripheral grooves (24) in the jacket co-acting with the cutting teeth (28).

17. Screw compactor for a device as claimed in claim 8, comprising a substantially rotational-symmetrical jacket with a lateral inlet and an outlet, a conveyor screw with screw blade accommodated rotatably in this jacket and a drive, **characterized by** at least one channel (30) through the wall (26) of the jacket.

18. Screw compactor as claimed in claim 17, **characterized in that** the channel is oriented in the screw compactor inclining rearward to the outside relative to the transporting direction.

19. Screw compactor as claimed in claim 17 or 18, **characterized in that** the debouchment of the channel (30) in the space (38) enclosed by the jacket is filled with gas-permeable material.

20. Screw compactor as claimed in any of the claims 14-19, **characterized in that** the conveyor screw comprises an axial channel debouching in the rear part thereof and at least one radial bore debouching in that channel.

21. Screw compactor as claimed in any of the claims 17-20, **characterized in that** the channel(s) is(are) connected via a line to a discharge system.

## Patentansprüche

1. Verfahren zum Entgasen von festem Schaumkunststoff, insbesondere Polyurethan-Schaumstoff, durch Zerkleinern und Verdichten des Schaumstoffs,
**dadurch gekennzeichnet, daß**
das Zerkleinern und Verdichten gleichzeitig durchgeführt werden.

2. Verfahren nach Anspruch 1, **dadurch gekennzeichnet, daß** die Temperatur dem Schaumkunststoffs während des Zerkleinerns und Verdichtens erhöht wird.

3. Verfahren nach Anspruch 1 oder 2, **dadurch gekennzeichnet, daß** ein Schraubenverdichter für das Zerkleinern und Verdichten verwendet wird.

4. Verfahren nach einem der Ansprüche 1-3, **dadurch gekennzeichnet, daß** eine Verbrennung verstärkende Bestandteile dem Schaumkunststoff zum Entgasen hinzugefügt werden.

5. Verfahren nach einem der Ansprüche 1-4, **dadurch gekennzeichnet, daß** die mechanische Festigkeit von entgastem und verdichtetem Kunststoff erhöhende Bestandteile dem Schaumkunststoff zum Entgasen hinzugefügt werden.

6. Vorrichtung zum Entgasen von Schaumkunststoff gemäß einem Verfahren nach Anspruch 1, **gekennzeichnet durch** ein Mittel zum gleichzeitigen Zerkleinern und Verdichten von Schamkunststoff.

7. Vorrichtung nach Anspruch 6 zum Entgasen von Schaumkunststoff gemäß einem Verfahren nach Anspruch 2, **gekennzeichnet durch** ein Mittel zum Erhöhen der Temperatur des Schaumkunststoffs während des Zerkleinerns und Verdichtens.

8. Vorrichtung nach Anspruch 6 oder 7 zum Entgasen von Schaumkunststoff gemäß einem Verfahren nach Anspruch 3, **gekennzeichnet durch** einen Schraubenverdichter.

9. Vorrichtung nach Anspruch 8, **dadurch gekennzeichnet, daß** diese eine Zufuhrvorrichtung (5, 6) für den Schraubenverdichter zusätzlich zu einem Gasblockiermittel (7) für ein über diese Zufuhrvorrichtung aus der Vorrichtung entweichendes Gas enthält.

10. Vorrichtung nach Anspruch 8, **dadurch gekennzeichnet, daß** der Schraubenverdichter in eine gegen Gase abschließbare Kammer (8) einmündet.

11. Vorrichtung nach Anspruch 10, **gekennzeichnet durch** ein Druckregelmittel zum Regulieren des Drucks, insbesondere zum Regulieren eines Unterdrucks, in der abschließbaren Kammer (8).

12. Vorrichtung nach Anspruch 10, **dadurch gekennzeichnet, daß** der Schraubenverdichter oberhalb mindestens einer schwingenden Platte einmündet, die in einer praktisch horizontalen Ebene wechselseitig beweglich ist.

13. Vorrichtung nach Anspruch 12, **dadurch gekennzeichnet, daß** der Schraubenverdichter oberhalb mindestens zweier schwingender Platten einmündet, die in einer praktisch horizontalen Ebene wechselseitig beweglich und in einer Kaskade mindestens teilweise übereinander angeordnet sind.

14. Schraubenverdichter für eine Vorrichtung nach Anspruch 8 mit einem im wesentlichen rotationssymmetrischen Mantel (1-3) mit einem seitlichen Einlaß (4) und einem Auslaß (25), einer Transportschraube mit einem Schraubenblatt (11), die in diesem Mantel drehbar untergebracht ist, und einem Antrieb, **gekennzeichnet durch** eine Schneidkante auf mindestens einem Teil des Schraubenblatts (11), die mit der Wand (26) des Mantels in dem Bereich des Einlasses zusammenwirkt.

15. Schraubenverdichter nach Anspruch 14, **dadurch gekennzeichnet, daß** die Schneidkante Schneidezähne (28) aufweist.

16. Schraubenverdichter nach Anspruch 15, **dadurch gekennzeichnet, daß** dieser mit den Schneidezähnen (28) zusammenwirkende Umfangsrillen (24) in dem Mantel aufweist.

17. Schraubenverdichter für eine Vorrichtung nach Anspruch 8 mit einem im wesentlichen rotationssymmetrischen Mantel mit einem seitlichen Einlaß und einem Auslaß, einer Transportschraube mit einem Schraubenblatt, die in diesem Mantel drehbar untergebracht ist, und einem Antrieb, **gekennzeichnet durch** mindestens einen Kanal (30) durch die Wand (26) des Mantels.

18. Schraubenverdichter nach Anspruch 17, **dadurch gekennzeichnet, daß** der Kanal in dem Schraubenverdichter so orientiert ist, daß er sich nach hinten zu der Außenseite in bezug auf die Transportrichtung neigt.

19. Schraubenverdichter nach Anspruch 17 oder 18, **dadurch gekennzeichnet, daß** die Einmündung des Kanals (30) in den durch den Mantel eingeschlossenen Raum (38) mit einem gasdurchlässigen Material gefüllt ist.

20. Schraubenverdichter nach einem der Ansprüche 14-19, **dadurch gekennzeichnet, daß** die Transportschraube einen axialen Kanal, der in ihren hinteren Teil einmündet, und mindestens eine radiale Bohrung aufweist, die in diesen Kanal einmündet.

21. Schraubenverdichter nach einem der Ansprüche 17-20, **dadurch gekennzeichnet, daß** der (die) Kanal (Kanäle) über eine Leitung mit einem Ausströmsystem verbunden ist (sind).

## Revendications

1. Procédé pour dégazer de la matière plastique expansée solide, en particulier de la mousse de polyuréthanne, en broyant et comprimant cette mousse, caractérisé en ce que les étapes de broyage et de compression sont effectuées simultanément.

2. Procédé suivant la revendication 1, caractérisé en ce que la température de la matière plastique expansée est augmentée lors des étapes de broyage et de compression.

3. Procédé suivant la revendication 1 ou 2, caractérisé en ce qu'un dispositif de compression à vis est utilisé pour les étapes de broyage et de compression.

4. Procédé suivant l'une quelconque des revendications 1 à 3, caractérisé en ce que des constituants favorisant la combustion sont ajoutés à la matière plastique expansée pour le dégazage.

5. Procédé suivant l'une quelconque des revendications 1 à 4, caractérisé en ce que des constituants augmentant la résistance mécanique de la matière plastique dégazée et comprimée sont ajoutés à la matière plastique expansée pour le dégazage.

6. Dispositif pour dégazer de la matière plastique expansée pour la mise en oeuvre d'un procédé selon la revendication 1, caractérisé par des moyens pour broyer et comprimer simultanément de la matière plastique expansée.

7. Dispositif selon la revendication 6 pour le dégazage de la matière plastique expansée pour la mise en oeuvre d'un procédé selon la revendication 2, caractérisé par des moyens pour augmenter la température de la matière plastique expansée pendant les étapes de broyage et de compression.

8. Dispositif suivant la revendication 6 ou 7 pour le dégazage de la matière plastique expansée suivant un procédé tel que revendiqué dans la revendication 3, caractérisé par un dispositif de compression à vis.

9. Dispositif suivant la revendication 8, caractérisé en ce qu'il comprend un dispositif d'alimentation (5, 6) pour le dispositif de compression à vis en supplément à des moyens (7) de blocage des gaz pour un gaz s'échappant à travers ce dispositif d'alimentation vers l'extérieur du dispositif.

10. Dispositif selon la revendication 8, caractérisé en ce que le dispositif de compression à vis débouche dans une chambre (8) pouvant être rendue étanche pour des gaz.

11. Dispositif selon la revendication 10, caractérisé par des moyens de commande de pression pour régler la pression, en particulier pour régler une dépression, dans la chambre (8) pouvant être rendue étanche.

12. Dispositif selon la revendication 10, caractérisé en ce que le dispositif de compression à vis débouche en-dessus d'au moins une plaque vibrante, déplaçable en va-et-vient dans un plan sensiblement horizontal.

13. Dispositif selon la revendication 12, caractérisé en ce que le dispositif de compression à vis débouche au-dessus d'au moins deux plaques vibrantes, déplaçables en un va-et-vient dans un plan sensiblement horizontal, et agencées en cascade, au moins partiellement l'une au-dessus de l'autre.

14. Dispositif de compression à vis pour un dispositif selon la revendication 8 comprenant une enveloppe (1-3) essentiellement symétrique en rotation, comprenant une entrée (4) latérale et une sortie (25), une vis transporteuse comportant une pale (11) de vis montée rotative dans cette enveloppe et un dispositif d'entraînement, caractérisé par un bord coupant sur au moins une partie de la pale (11) de vis coopérant avec la paroi (26) de l'enveloppe dans la zone d'entrée.

15. Dispositif de compression à vis selon la revendication 14, caractérisé en ce que le bord coupant comprend des dents (28) coupantes.

16. Dispositif de compression selon la revendication 15, caractérisé en ce qu'il comprend des gorges (29) périphériques ménagées dans l'enveloppe et coopérant avec les dents (28) coupantes.

17. Dispositif de compression à vis pour un dispositif selon la revendication 8, comprenant une enveloppe de forme essentiellement symétrique en rotation, comportant une entrée latérale et une sortie, une vis transporteuse avec une pale de vis montée rotative dans cette enveloppe et un dispositif d'entraînement, caractérisé par au moins un canal (30) à travers la paroi (26) de l'enveloppe.

18. Dispositif de compression à vis selon la revendication 17, caractérisé en ce que le canal est orienté, dans le dispositif de compression à vis, incliné en arrière vers l'extérieur par rapport à la direction de transport.

19. Dispositif de compression à vis selon la revendication 17 ou 18, caractérisé en ce que l'embouchure du canal (30) dans l'espace (38) enfermé par l'enveloppe est rempli avec un matériau perméable au gaz.

20. Dispositif de compression à vis selon l'une quelconque des revendications 14 à 19, caractérisé en ce que la vis transporteuse comprend un canal axial débouchant dans la partie arrière de celle-ci et au moins un alésage radial débouchant dans ce canal.

21. Dispositif de compression à vis selon l'une quelconque des revendications 17 à 20, caractérisé en ce que le ou les canaux sont reliés par l'intermédiaire d'une canalisation à un système d'évacuation.
